# EUROPEAN PATENT SPECIFICATION

(11) **EP 1 971 172 B1**
(45) Date of publication and mention of the grant of the patent: **02.09.2009**
(21) Application number: 07104049.7
(22) Date of filing: 13.03.2007
(51) Int. Cl.: H04W 88/02

(54) **Enhanced handling of duress situations**
Verbesserte Bewältigung von Zwangssituationen
Manipulation améliorée de situations de contraintes

(43) Date of publication of application: 17.09.2008
(73) Proprietor: Research In Motion Limited, Waterloo, Ontario N2L 3W8 (CA)
(72) Inventor: Hodgson, John, Ottawa, Ontario K2P 0X2 (CA); Wilson, Nicholas Bryson, Ottawa, Ontario K1S 2L9 (CA)
(74) Representative: Rickard, David John

(56) References cited:
- GB-A- 2 401 752
- GB-A- 2 419 783

## Description

The present invention relates generally to wireless communications and, in particular, to wireless devices configured to handle duress situations.

Some handheld wireless communications devices, such as the BlackBerry® by Research in Motion Limited, are configured to enable a user to send out an emergency message in a duress situation. If a user is under duress and being forced to unlock the handheld device, the user merely has to enter a modified password to trigger the sending of an e-mail message to a predetermined duress notification address, which is either a single e-mail address of a desired recipient or a distribution list (as determined by a configurable duress notification policy). The modified password can simply be a variation of the usual password, such as, for example, transposing the first character to the end of the password.

As a safety feature, as is the case with current BlackBerry® models, the handheld device does not save a copy in the sent messages in the list, nor does it show the network communication arrows when sending.

In order to satisfy an increasingly security-conscious population, further improvements and refinements to this basic technology remain highly desirable.

GB-A-2401752 discloses a mobile device arranged to respond to a user pressing an eyewitness button by immediately starting streaming video and audio data together with time and location data to a remote data storage facility.

GB-A-2419783 discloses a mobile device arranged to capture data, such as an image or a sound, and transmit the data to a remote location in response to a single user action.

### GENERAL

The present invention may improve the handling of a duress situation experienced by a user of a wireless communications device. The present invention may be directed to improvements in the manner in which the wireless device responds when the user triggers the generation and transmission of a duress message.

In general, the device may be enabled to provide emergency-response information about the environment in which the device is situated when the user triggers the generation and transmission of a duress message to a predetermined recipient. The duress message may contain emergency-response information such as, for example, GPS data that would indicate to the recipient where the device is currently situated, a digital photograph taken surreptitiously (i.e. silently and invisibly) that might provide a clue to the recipient as to the location of the device or the identity of the user's assailant. The emergency-response information could also contain au audio clip that might provide a voice print of the assailant. The wireless device can also provide updated information by periodically transmitting follow-up duress messages.

If the wireless device is outside of data packet coverage, then the device could attempt to transmit the duress message using an alternate mode of communication, such as SMS or MMS. If no mode of communication is available, then the wireless device may store the duress message until its ability to communicate is restored.

In response to the duress message, a monitoring service can query the wireless device for specific information that would be particularly useful to the recipient in coordinating an emergency response to the duress situation. Thus, the wireless device and monitoring service can be considered to be engaging in a "duress conversation".

Thus, an aspect of the present invention may provide a method of triggering a wireless device to automatically generate a message for sending to a predetermined recipient to provide information about the environment that the wireless device is situated in, the method comprising the steps of: capturing information about the environment in which the device is situated; automatically incorporating the captured information into the message; automatically transmitting the message to the predetermined recipient that enables identifying of the incoming message as a duress message; receiving a query containing a request for further information to the wireless device; automatically obtaining the further information to reply to the query; and automatically transmitting to the predetermined recipient a reply containing the further information.

Another aspect of the present invention may provide a system for monitoring communications from wireless devices to provide emergency responses to users of the wireless devices, the system comprising: a wireless device having: an input device for enabling the user to automatically generate a message for sending to a predetermined recipient to provide information about the environment that the user is situated in; a processor for directing the device to capture information about the environment in which the device is situated and for instructing an e-mail application executing on the device to automatically incorporate the captured information into the message and to automatically transmit the message to the predetermined recipient; and a monitoring service hosted on a server for monitoring communications from the wireless device and configured to identify an incoming message that has been automatically generated and transmitted by the wireless device, wherein the monitoring service is arranged to send a query containing a request for further information to the user.

Yet another aspect of the present invention may provide a wireless communications device for communicating information about an environment in which the device is situated, the wireless device comprising: an input device for enabling a user to trigger the wireless device to automatically generate a message for sending to a predetermined recipient to provide information about the environment in which the user of the device is situated; and a processor for directing the device to capture information about the environment in which the device is situated and for instructing an e-mail application to automatically incorporate the information into the message and automatically transmit the message to the predetermined recipient wherein the processor can receive an incoming message from the predetermined recipient requesting further information and transmit to the predetermined recipient the further information obtained from the wireless device.

### BRIEF DESCRIPTION OF THE DRAWINGS

Further features and advantages of the present invention will become apparent from the following detailed description, taken in combination with the appended drawings, in which:
FIG. 1 is a schematic illustration of a system for monitoring communications from wireless devices to provide an emergency response to a user in a duress situation in accordance with an aspect of the present invention;
FIG. 2 is a schematic illustration of the transmission of a duress message incorporating GPS data, a digital photograph and a digitized audio clip in accordance with an embodiment of the present invention;
FIG. 3 is a flowchart depicting a method of handling a duress situation experienced by a user of a wireless device in accordance with embodiments of the present invention;
FIG. 4 is a schematic illustration of the interaction between a wireless device, a monitoring service and an emergency-response call center in accordance with embodiments of the present invention; and
FIG. 5 is a schematic illustration of a system for monitoring communications from wireless devices to provide an emergency response to a user in a duress situation where the monitoring service is implemented using a proxy server disposed behind a firewall.

It will be noted that throughout the appended drawings, like features are identified by like reference numerals.

### DESCRIPTION OF PREFERRED EMBODIMENTS

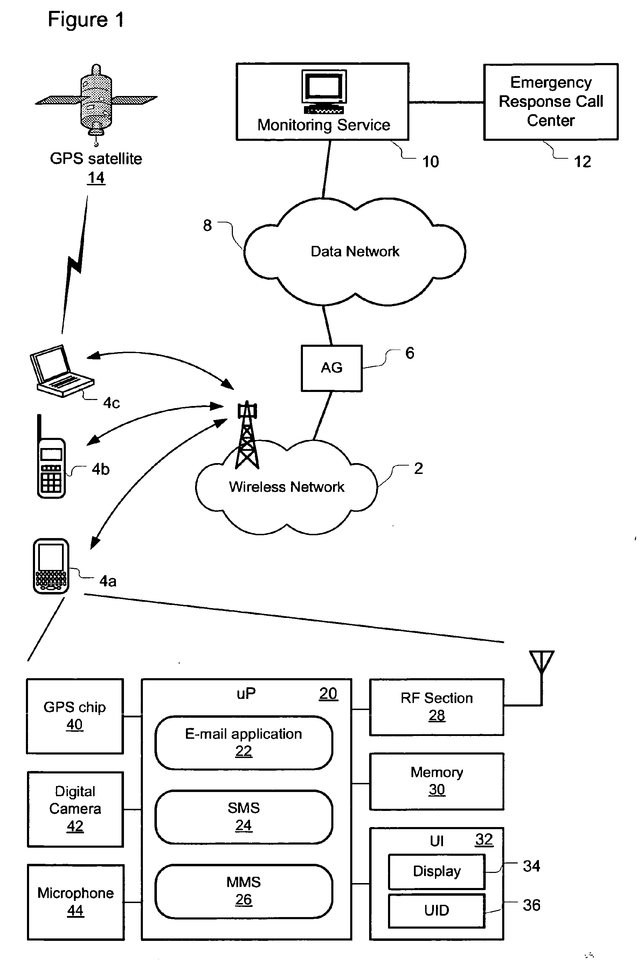

FIG. 1 schematically illustrates a system for monitoring communications from wireless devices to provide emergency responses to users in duress situations. As depicted in FIG. 1, a wireless network 2 hosts a plurality of wireless devices including, by way of example only, a handheld wireless communications device 4a (such as the BlackBerry^{™} by Research in Motion Limited) having voice and data capabilities (for both e-mail, web browsing and the like) as well as a full or reduced QWERTY keyboard, a cell phone 4b, or a wireless-enabled laptop computer 4c.

As shown in FIG. 1, these wireless devices 4a-4c can access data services hosted on a data network 8 (e.g. the Internet) via an applications gateway (AG) 6 which mediates data flow between the wireless network and the data network. As further illustrated in FIG. 1, a monitoring service 10 (or other message recipient) is connected to the data network to receive duress messages from one or more users of the wireless devices 4a-4c, as will be elaborated below. Upon receipt of a duress message, the monitoring service 10 (or other designated recipient) can contact an emergency-response call center (e.g. a 911 call center, typically by a voice call) in order to coordinate an emergency response to the duress message.

FIG. 1 schematically illustrates the pertinent components of the wireless communications device 4a which enable the device to capture and communicate emergency-response information when a user of the device is under duress. As shown in FIG. 1, the wireless communications device has a microprocessor ("processor") 20 for executing various applications such as an e-mail application 22, a Short Message Service (SMS) module 24 and/or a Multimedia Message Service (MMS) module 26. The wireless communications device 4a also includes a RF section 28 for wireless communication with a base station of the wireless network 2. The wireless communications device 4a further includes a memory 30 (both volatile and non-volatile) and a user interface 32 having both a display (i.e. a graphical user interface) 34 and a user input device 36. The input device, e.g. a QWERTY keypad or an alphanumeric phone keypad, enables the user to trigger the wireless communications device to automatically generate a duress message for alerting a predetermined recipient that the user is in a duress situation.

Triggering the automatic generation and transmission of the duress message can be accomplished by inputting a modified version of the user's password for unlocking the device. For example, the modified password can be the usual password with the first letter transposed to the end of the password. Alternatively, the user can customize the device to recognize any other duress password or appropriate input which signifies a duress situation.

For the purposes of this specification, "duress situation" means a situation in which the user of the wireless device is being threatened or coerced, possibly into unlocking the wireless device by entering the user's password.

When the user triggers the device to signal a duress situation, the processor 20 of the wireless device directs the wireless device to capture emergency-response information about the environment in which the device is situated and then instructs the e-mail application 22 to automatically incorporate the emergency-response information into the duress message and automatically transmit the duress message to the predetermined recipient (such as the monitoring service 10).

The "environment" may include such information as the location, position and surroundings of the wireless device. Therefore, "emergency-response information" can include visual data (e.g. one or more photos or a video clip) of the environment or surroundings as well as sound data (e.g. digitized audio clips) of the environment/surroundings. Emergency-response information can also include GPS data of the device's position derived using an onboard GPS chip 40 that can receive and use GPS signals from 3 or 4 GPS satellites 14. Alternatively, any GPS device is suitable to receive GPS signals from GPS satellites 14, such as an external GPS puck. The GPS data (coordinates) can then be readily converted by the recipient using any one of a number of mapping applications which convert GPS coordinates of longitude and latitude into a map location. Therefore, the GPS data (when converted or mapped) provides the recipient (or monitoring service 10) with the exact location of the device.

The wireless communications device can also include an embedded digital camera 42 for surreptitiously (*i.e.* silently and invisibly) taking one or more digital photographs of the environment. The digital photograph(s) can be transmitted as part of the duress message to the recipient to potentially provide visual clues as to the identity of the assailant and/or as to the location of the device (i.e. the recipient may be able to recognize a landmark or a distinctive geographical or urban feature that would help identify where the device is located, or the recipient may at least be able to discern, from the lighting and background details, whether the device is inside a building, outside on a busy street corner, in a park, in an alleyway, etc.)

In another embodiment, the wireless communications device 4a could capture a video clip for transmission to the recipient. However, due to limited wireless bandwidth, it is preferable to transmit periodic photos rather than an entire video clip to ensure that the duress messages are received without error or delay.

The wireless communications device 4a could further include a microphone 44 for capturing a digital audio clip. The microphone 44 can be part of the device's onboard phone or a separate microphone can be embedded within the device. The audio clip could potentially provide useful information about the environment or about the identity of the assailant (a voice print), the nature of the assault, the status of the user, etc. Where the duress message incorporates both GPS data and a photo (and possibly also an audio clip), this emergency-response information can prove very useful for the recipient in coordinating an intelligent and effective emergency response to the duress situation.

As noted above, the digital camera 42 embedded in the wireless device should "surreptitiously" (silently and invisibly) capture the digital picture, i.e. without the assailant noticing. Surreptitious photography requires that the wireless device suppress and disable all device functionalities that make clicking sounds, set off flashes, activate red-eye features, cause LEDs to blink or icons to materialize or anything that would otherwise tip off an assailant that a photograph is being, or has been, taken. The processor in the wireless communications device is thus configured to put the camera in "duress mode". In other words, the processor instructs the digital camera to disable the camera flash, red-eye, LEDs, icons, and all visual indicators that would indicate that a digital photograph is being taken.

In a variant, the processor of the wireless communications device can be configured to instruct the digital camera to photograph at low resolution in order to facilitate data transmission over the bandwidth-limited wireless channel. Alternatively, the processor can be configured to execute a data compression algorithm for compressing the digital photograph prior to transmission, again to ensure prompt data packet transmission over the wireless channel.

In a preferred embodiment, the wireless communications device transmits the duress message(s) over a data packet network as its primary (or default) communications channel. Although e-mail is the preferred mode of communication for data packet duress messages, other modes of communication can be designated or configured as the primary mode, such as a TCP/IP-type data conversation. However, if the wireless device is outside data packet coverage and thus the device cannot immediately transmit an e-mail duress message, the wireless device (provided it is equipped with a Short Message Service (SMS) module) can send the duress message using SMS as an alternate mode of transmitting the duress message, in which case only text data would be transmitted (i.e. no digital photos). Alternatively or additionally, the wireless communications device could have a Multimedia Message Service (MMS) module as an alternate mode of transmitting the duress message, in which case text, photo, video and audio data could also be transmitted. Preferably, the wireless communications device has both MMS and SMS modules so that it can attempt to use one or the other as alternate modes of transmitting the duress message. The wireless communications device could also be enabled to communicate via a satellite link, or even using short-range RF technologies like Bluetooth^{™} or by any other alternate mode of communication available to the device.

If no mode of communication is available to immediately transmit the duress message, the wireless communications device will locally store the duress message in the memory 30 until the ability to communicate using at least one mode of communication is restored. In this embodiment, the processor 20 in the wireless device is configured to direct the e-mail application 22 to "surreptitiously" store the duress message by temporarily storing the duress message in the memory 30 of the wireless device while the wireless device is unable to communicate. The device should preferably store the "non-sendable" messages in non-volatile memory as a countermeasure in case the assailant tries to remove the device's battery.

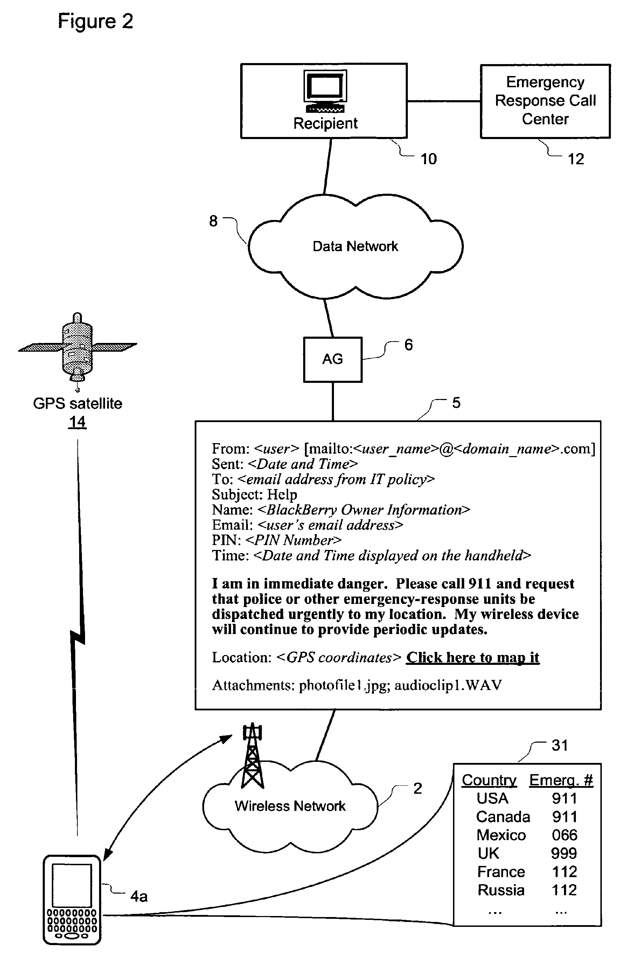

As depicted schematically in FIG. 2, the wireless communications device 4a sends a duress message 5 having, in one specific embodiment, the header format and content as shown. In this embodiment, the duress message contains GPS coordinates and a hyperlink to a mapping application that enables the recipient to quickly convert the GPS data into a position on a map. In this embodiment, the duress message 5 also contains attachments, namely a digital photograph (e.g. photofile1.jpg) and a digital audio clip (e.g. audioclipl.WAV). These file formats are merely meant to serve as examples; other formats could of course be employed. In this particular embodiment, the duress message 5 contains a subject line that reads "Help" (although this could be customized by the user to say something else) and a message content could read, for example, "I am in immediate danger. Please call 911 and request that police or other emergency-response units be dispatched urgently to my location. My wireless device will continue to provide periodic updates." As is known in the art, some networks include the emergency number as part of a network selection information packet, thus providing the device with the desired emergency contact number. Alternatively, or as back-up for those networks that do not offer this feature, the device can determine the number on its own, i.e. based on GPS coordinates and/or the identity of the wireless network hosting the device. In other words, the wireless communications device can determine which country it is currently in and can then look up the emergency-response number corresponding to that country in an emergency number database 31 stored in the memory 30 of the device. Therefore, when the duress message is being generated, the wireless communications device 4a inserts the correct emergency response number into the duress message 5. For example, if the device is in the United States or Canada, the duress message 5 will request that the recipient dial 911. If the device is in Mexico, the duress message 5 will ask the recipient 10 to dial 066. If the device is in the United Kingdom, the duress message 5 will request that the recipient dial 999. If the device is in France, the Netherlands or Russia, the duress message 5 tells the recipient to dial 112.

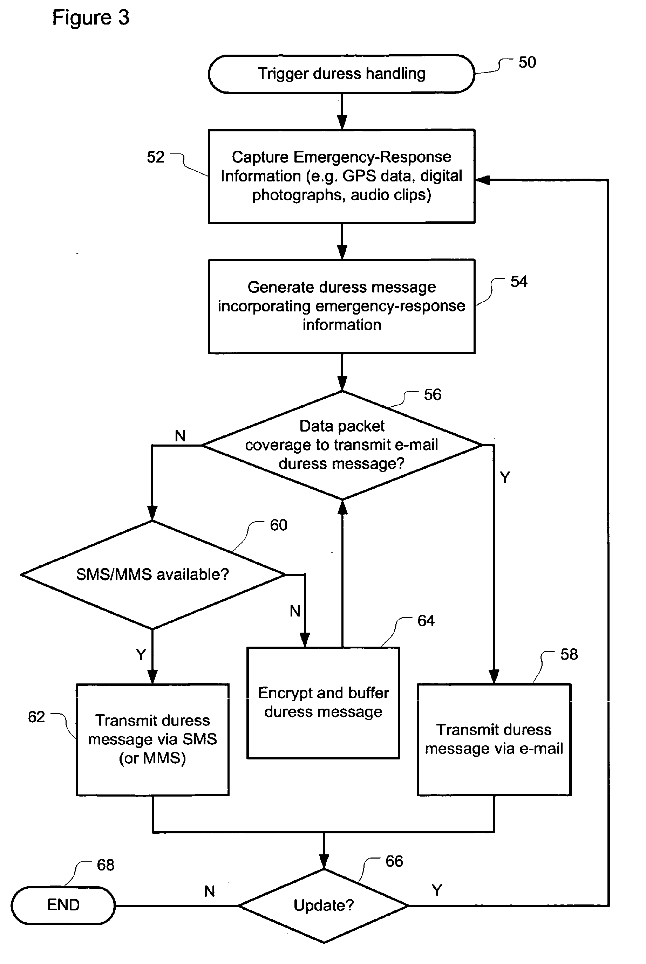

Another aspect of the present invention provides a method of handling a duress situation experienced by a user of a wireless device. As depicted in FIG. 3, the method includes steps of enabling the user to trigger the wireless device to automatically generate a duress message for alerting a predetermined recipient that the user is in a duress situation (step 50) and capturing emergency-response information about the environment in which the device is situated (step 52). The method further includes steps of automatically incorporating the emergency-response information into the duress message (step 54) and then automatically transmitting the duress message to the recipient (step 58).

In one embodiment, as shown in FIG. 3, the method further includes the step of determining whether data packet coverage is available for transmitting the duress message via e-mail (step 56) or another suitable data message. If the device determines that data packet communication is possible, it then proceeds to transmit the duress message via e-mail (step 58). Otherwise, if no data packet coverage is available, the device will determine whether an alternate mode of communication is available, such as, for example, SMS or MMS (step 60). If SMS or MMS is available, the device will transmit the duress message via SMS or MMS (step 62). If SMS or MMS is unavailable (and no other mode of communication is available), the device will store (or "buffer") the duress message or, preferably, both encrypt and store the duress message (step 64) until at least one mode of communication is restored, at which point the device will transmit the delayed duress message.

In one embodiment, the device detects whether the wireless transceiver (RF section 28) is on or off. If the RF section 28 is off, then the device automatically and surreptitiously turns it on. In another embodiment, the device will prevent the assailant from turning off the wireless transceiver/RF section. This can be accomplished by "faking" that the RF section has been successfully turned off by showing on the display of the device that the RF section is off while in fact the device is surreptitiously still on and transmitting.

As shown in FIG. 3, after the step of encrypting and storing the duress message (step 64), the method loops back to periodically reassess whether e-mail coverage is available (step 56), and if not whether SMS/MMS coverage is available (step 60). If either one of these modes of communication is available, the device transmits the duress message (either by e-mail at step 58 or by SMS/MMS at step 62). If none of the modes of communication is available, the device continues to store the duress message.

As further depicted in FIG. 3, the method can include a further step (step 66) of updating the emergency-response information by capturing fresh photos, audio clips and/or GPS data and sending the updated information in a follow-up duress message. If the duress situation is over, then the user can instruct the device to cease generating and transmitting further duress message, *i.e.* to end the duress handling (step 68). For example, this could be done by a voice call to the monitoring station or to the wireless service provider to inform them that the user is no longer in the duress situation.

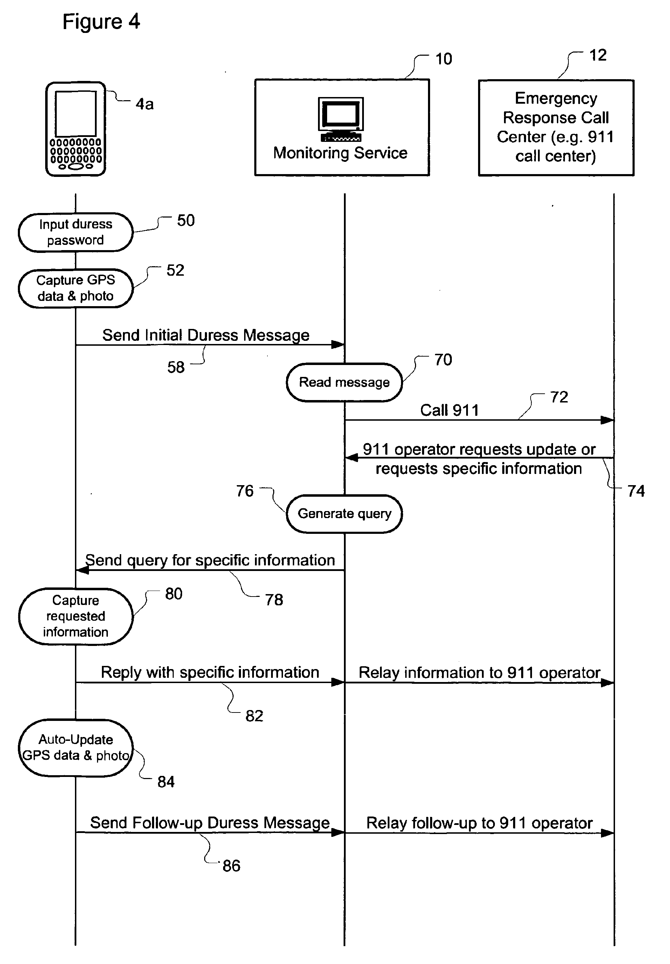

FIG. 4 is a schematic illustration of the interaction ("duress conversation") between the wireless communications device 4a, the monitoring service 10 and the emergency-response call center 12 in accordance with embodiments of the present invention. In the scenario depicted in FIG. 4, when a user inputs a duress password to trigger the generation and transmission of a duress message (step 50), the device (at step 52) automatically captures emergency-response information (*e.g*. GPS data and/or a digital photo and optionally also an audio clip). The wireless communications device 4a then sends the initial duress message (step 58) to the monitoring service 10.

The monitoring service 10 can be a private or public entity charged with monitoring user communications for duress situations. In other words, the monitoring service 10 can be manned by corporate security personnel or by publicly-funded emergency response call center personnel (such as 911 operators in which the monitoring service 10 and the emergency response call center are effectively merged into a single entity. However, for the purposes of the scenario depicted in FIG. 4, the monitoring service 10 will be treated as a separate and distinct entity from the emergency response call center (e.g. the 911 call center). The monitoring service 10 can be implemented using a standalone application or it can be incorporated into a enterprise server administration console.

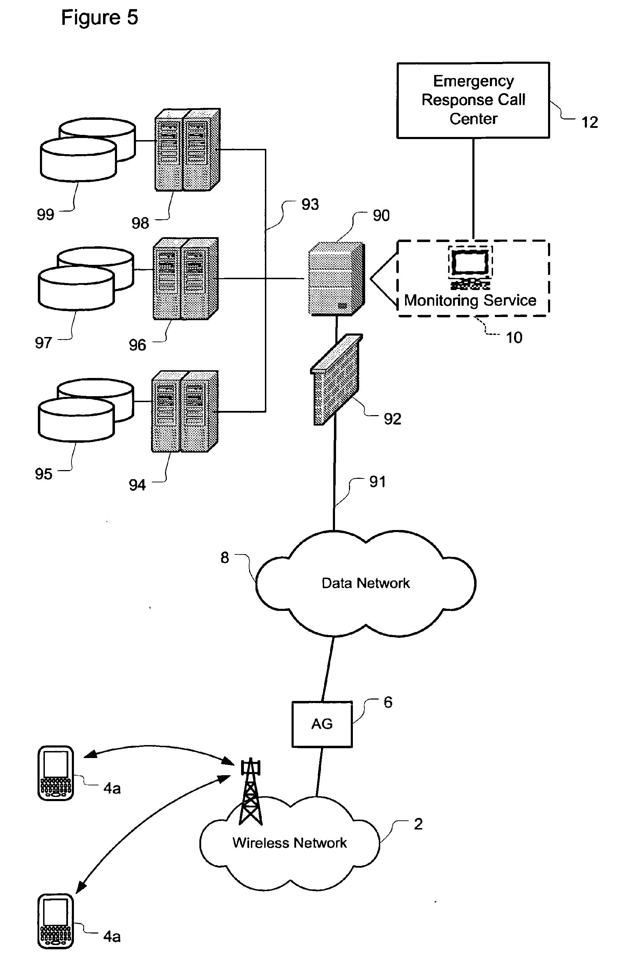

As shown in FIG. 5, the monitoring service 10 can be implemented, for example, by utilizing the BlackBerry® Mobile Data Service^{™} (MDS) functionality of the BlackBerry Enterprise Server^{™} 90. Installed behind a firewall 92, MDS acts as a proxy server or wireless gateway by providing a "secure pipe" to establish HTTP connections (using TCP/IP) over the same secure channel as is used for wireless e-mail. In one embodiment, the monitoring service 10 can be incorporated within the MDS on the BlackBerry Enterprise Server 90. Alternatively, the monitoring service 10 can be a server separate from the BES 90. In either case, the monitoring service 10 operates independently pre-existing MDS and BES functionalities that enable wireless devices to establish secure HTTP, HTML and WML connections with a web server 94 and its database 95, to establish secure HTTP and XML connections with an application server 96 and its database 97, and to establish secure SOAP/HTTP and XML connections with an applications server 98 with web services and its database 99.

Accordingly, the MDS/BES server can be modified to incorporate monitoring capabilities, i.e. the BES server can be modified to be a "monitoring service server" for hosting a monitoring service for monitoring one or more duress messages transmitted by one or more wireless communications devices. In this embodiment, the monitoring service server includes an external data connection 91 through the firewall 92 to an external data network 8 to which one or more wireless networks 2 hosting the one or more wireless communications devices 4a are connected. In this embodiment, the monitoring service server 90 also includes an least one internal data connection to one or more respective applications servers (or web servers) 94, 96, 98 disposed behind the firewall 92 to which the wireless communications devices 4a can establish secure connections through the firewall 92 and monitoring service server 90. A monitoring service application executing on the monitoring service server 90 filters data transiting the monitoring service server 90 to detect a duress message containing emergency-response information about the environment in which the wireless communications device 4a transmitting the duress message is situated. In one embodiment, the monitoring service server 90 automatically establishes a communication link (e.g. a voice call) with the emergency response call center 12. In another embodiment, the monitoring service server 90 transmits a query to the wireless communications device 4a to request that the device surreptitiously obtain and respond with specific information (e.g. at the behest of the emergency response call center or directly from police or other emergency response authorities).

Returning now to FIG. 4, when the monitoring service 10 receives the duress message, the duress message is read (step 70) either by a human operator or by an application capable of processing the information contained in the duress message. The monitoring service 10 then contacts the emergency response call center 12, preferably by dialling 911 (or the national emergency response number) at step 72. This usually entails a voice call by a human operator (corporate security personnel) to the 911 operator to notify the 911 operator that a user is under a duress situation, and to provide the location and other relevant information from the photos and clips contained in the duress message. Alternatively, the monitoring service 10 can forward the duress message to the emergency-response call center (e.g. the 911 operator) provided that the emergency-response call center is equipped to receive e-mails. In another embodiment, the monitoring service 10 could automatically forward the duress message to the emergency-response call center 12. In yet another embodiment, the duress message could be transmitted directly to the emergency-response call center 12. However, as most emergency-response call centers are currently only equipped to deal with voice calls, the monitoring service 10 acts as an intermediary to ensure that the emergency-response information in data format is conveyed by voice to the 911 operator in the emergency-response call center.

After the 911 call has been placed by personnel at the monitoring service 10 (step 72), the 911 operator may request additional, specific information (step 74) in order to assist the police or other emergency-response personnel in responding effectively and efficiently to the duress situation. Based on this information request, the monitoring service 10 will generate an e-mail or TCP/IP-type query (step 76) to the user under duress and transmit the query (step 78) as promptly as possible using a mode of communication believed to be still operational and, failing a successful transmission using that mode, will then transmit the query using alternate modes of communication.

As depicted in FIG. 4, upon receipt of the query, the wireless communications device will capture the requested information (step 80) by obtaining new GPS coordinates, taking a new picture, obtaining a new audio clip, or capturing any other emergency-response information that the device can collect. The device then replies to the query (step 82) with a reply message containing the requested information. The monitoring service 10 can then relay the message, e.g. by forwarding the e-mail or simply reading/interpreting the contents of the message for the 911 operator (who is usually still on the line at this point).

If the duress situation endures, a multiplicity of queries and replies can be transmitted back and forth between the wireless communications device and the monitoring service, thus constituting a "duress conversation" that provides periodically updated information to the monitoring service and emergency-response units. As the duress conversation occurs automatically, silently and invisibly, no input or response from the user of the wireless device is required. As the duress messages do not appear in the Outbox or Sent Items folders of the e-mail application, even if the assailant were to gain access to the e-mail application, he would not be able to find or interfere with the duress message transmissions. Furthermore, the processor would not allow the assailant to reformat, delete, overwrite or otherwise disable the operating system, GPS module, camera, microphone, e-mail application or any of the other applications or onboard modules that are used to implement this enhanced duress handling.

As further depicted in FIG. 4, the device will periodically send a follow-up duress message containing fresh, updated emergency-response information. Note this follow-up message is automatically generated after a predetermined interval of time (and is thus not a reply to the query from the 911 operator). To generate the follow-up duress message, the device captures new emergency-response information (step 84) and sends this emergency-response information (step 86) via e-mail or via an alternate mode of communication if e-mail is not operational at that time.

The capture and transmission in a duress message of emergency-response information about the environment in which the device is situated thus enables a predetermined, designated recipient to coordinate an emergency response to the duress situation or to contact an emergency-response call center (e.g. a 911 operator) in order to dispatch police or other emergency-response units to rescue the user of the wireless device. Accordingly, a wireless device having this enhanced duress handling provides greater personal security for the user.

The method steps can be stored on a computer program product having code adapted to perform the steps of the method when the computer program product is loaded into memory and executed on the processor of the wireless communications device.

The embodiments of the invention described above are intended to be exemplary only. The scope of the invention is therefore intended to be limited solely by the scope of the appended claims.

## Claims

1. A method of triggering a wireless device (4a) to automatically generate a message (5) for sending to a predetermined recipient (10) to provide information about the environment that the wireless device (4a) is situated in, the method comprising the steps of:
capturing information (52) about the environment in which the device (4a) is situated;
automatically incorporating (54) the captured information into the message (5);
automatically transmitting (58, 62) the message (5) to the predetermined recipient (10) that enables identifying of the incoming message (5) as a duress message;
receiving (78) a query containing a request for further information to the wireless device (4a);
automatically obtaining (80) the further information to reply to the query; and
automatically transmitting (82) to the predetermined recipient (10) a reply containing the further information.

2. The method as claimed in claim 1 wherein the step of capturing (52) the information comprises steps of:
obtaining Global Positioning System 'GPS' data using a GPS device (40); and
incorporating the GPS data into the message (5) for transmitting to the predetermined recipient (10).

3. The method as claimed in claim 1 or claim 2 wherein the step of capturing (52) the information comprises steps of:
surreptitiously and/or automatically taking a digital photograph using a digital camera (42) embedded within the device (4a); and
incorporating the digital photograph into the message (5) for transmitting to the predetermined recipient (10).

4. The method as claimed in claim 3 wherein the step of surreptitiously taking a digital photograph comprises steps of:
disabling a camera flash on the digital camera (42); disabling all visual indicators on the device (4a) that indicate that a digital photograph is being taken; and
setting the digital camera (42) at a low resolution to facilitate data transmission.

5. The method as claimed in claim 3 or claim 4 further comprising a step of applying a data compression algorithm to the digital photograph to create a smaller digital picture file to facilitate data transmission.

6. The method as claimed in any one of the preceding claims wherein the step of capturing (52) the information comprises steps of:
surreptitiously and/or automatically recording a digital audio clip using a microphone (44) embedded within the device (4a); and
incorporating the digital audio clip into the message (5) for transmitting to the predetermined recipient (10).

7. The method as claimed in any one of the preceding claims wherein the message (5) is transmitted to a monitoring service (10) to provide updated information about the environment that the device (4a) is situated in to the monitoring service (10).

8. The method as claimed in any one of claims 1 to 6 wherein the step of automatically transmitting (58) the message (5) to the predetermined recipient (10) comprises a step of transmitting an e-mail duress message (5) over a data packet network (8).

9. The method as claimed in claim 8 further comprising a step of transmitting (62) the message (5) using an alternate mode of communication when the device (4a) is outside a coverage area of the data packet network (8).

10. The method as claimed in claim 9 wherein the alternate mode of communication comprises any of Short Message Service 'SMS' or Multimedia Message Service `(MMS)'.

11. The method as claimed in claim 9 or claim 10 further comprising steps of:
locally storing (64) the message (5) when all modes of communication for the device (4a) are unavailable; and
transmitting (58) the message (5) as soon as a first mode of communication becomes available again.

12. The method as claimed in claim 11 further comprising a step of encrypting (64) the message for secure temporary storage (64) in non-volatile memory (30) of the device (4a).

13. The method as claimed in claim 11 or claim 12 further comprising the step of temporarily disabling all device (4a) functionality that would otherwise enable the user to erase or reformat any portion of the memory (30) of the wireless device (4a) until the message (5) has been transmitted (58, 62).

14. A system for monitoring communications from wireless devices (4a) to provide services to users of the wireless devices (4a), the system comprising:
a wireless device (4a) having:
an input device for enabling the user to automatically generate a message (5) for sending to a predetermined recipient (10) to provide information about the environment that the device (4a) is situated in;
a processor (20) for directing the device (4a) to capture information about the environment in which the device (4a) is situated and for instructing an e-mail application (22) executing on the device (4a) to automatically incorporate the captured information into the message (5) and to automatically transmit the message (5) to the predetermined recipient (10); and
a monitoring service (10) hosted on a server for monitoring communications from the wireless device (4a) and configured to identify an incoming message (5), that has been automatically generated and transmitted by the wireless device (4a), as a duress message, wherein the monitoring service (10) is arranged to send a query containing a request for further information to the wireless device (4a) which is adapted to automatically transmit a reply containing the further information.

15. The system as claimed in claim 14 wherein the monitoring service (10) is arranged to communicate with a call center (12) upon receipt of the automatically generated message.

16. The system as claimed in claim 14 or claim 15 to 17 wherein the wireless device (4a) comprises a digital camera (42) for surreptitiously and/or automatically capturing a digital picture that the device (4a) can transmit automatically to the monitoring service (10).

17. The system as claimed in any one of claims 14 to 16 wherein the wireless device (4a) comprises a GPS chip (40) for capturing position data for the device (4a) for transmission to the monitoring service (10).

18. The system as claimed in any one of claims 14 to 17 wherein the wireless device (4a) comprises a Short Message Service 'SMS' module (24) or a Multimedia Message Service 'MMS' module (26) as an alternate mode of transmitting the message.

19. The system as claimed in any one of claims 14 to 18 wherein the processor (20) is configured to direct the e-mail application (22) to store the message (5) by temporarily storing the message in a memory (30) of the wireless device (4a) while the wireless device (4a) is unable to communicate with the monitoring service (10).

20. A wireless communications device (4a) for communicating information about an environment in which the device (4a) is situated, the wireless device (4a) comprising:
an input device for enabling a user to trigger the wireless device (4a) to automatically generate a message (5) for sending to a predetermined recipient (10) to provide information about the environment in which the device (4a) is situated; and
a processor (20) for directing the device (4a) to capture information about the environment in which the device (4a) is situated and for instructing an e-mail application (22) to automatically incorporate the information into the message (5) and automatically transmit the message to the predetermined recipient (10) wherein the processor (20) is adapted to receive an incoming message from the predetermined recipient (10) requesting further information and to automatically transmit to the predetermined recipient (10) the further information obtained from the wireless device (4a).

21. The wireless communications device (4a) as claimed in claim 20 further comprising a digital camera (42) for surreptitiously and/or automatically capturing a digital picture that the device (4a) can transmit automatically to the predetermined recipient (10).

22. The wireless communications device (4a) as claimed in claim 20 or claim 21 further comprising a GPS chip (40) for capturing position data for the device (4a) for transmission to the predetermined recipient (10).

23. The wireless communications device (4a) as claimed in any one of claims 20 to 22 further comprising a Short Message Service 'SMS' module (24) or a Multimedia Message Service `MMS' (26) module as an alternate mode of transmitting the duress message (5).

24. The wireless communications device (4a) as claimed in any one of claims 20 to 23 wherein the processor (20) is configured to direct the e-mail application (22) to store the message (5) by temporarily storing the message (5) in a memory (30) of the wireless device (4a) while the wireless device (4a) is unable to communicate.

25. The wireless communications device (4a) as claimed in any one of claims 20 to 24 further comprising a microphone (44) to surreptitiously and/or automatically record a digital audio clip for transmission to the predetermined recipient (10).

26. The wireless communications device (4a) as claimed in claim 21 or any one of claims 22 to 25 when dependent on claim 21 wherein the processor (20) is configured to instruct the digital camera (42) to disable a camera flash and all visual indicators that would indicate that a digital photograph is being taken.

27. The wireless communications device (4a) as claimed in claim 26 wherein the processor (20) is configured to instruct the digital camera (42) to photograph at low resolution.

28. The wireless communications device (4a) as claimed in claim 26 or claim 27 wherein the processor (20) is configured to execute a data compression algorithm for compressing the digital photograph prior to transmission.

29. A computer program product comprising code adapted to cause a wireless communications device (4a) to perform the steps of the method of any one of claims 1 to 13 when the computer program product is loaded into memory (30) and executed on a processor (20) of the wireless communications device (4a).

30. A monitoring service server (90) for hosting a monitoring service (10) for monitoring one or more messages (5) automatically generated and transmitted by one or more wireless communications devices (4a), the monitoring service server (90) comprising:
an external data connection (91) through a firewall (92) to an external data network (8) to which one or more wireless networks (2) hosting the one or more wireless communications devices (4a) are connected;
an least one internal data connection (93) to one or more respective applications servers (94, 96, 98) disposed behind the firewall (92) to which the wireless communications devices (4a) can establish secure connections through the firewall (92) and monitoring service server; and
a monitoring service application executing on the monitoring service server (90) for filtering data transiting the monitoring service server (90) to detect a duress message (5) automatically generated and transmitted by one of the communications devices (4a) and containing information about the environment in which the wireless communications device (4a) transmitting the message is situated wherein the monitoring service application is further adapted to transmit a query to the wireless communications device (4a) to request that the device (4a) surreptitiously obtain and respond with specific information, wherein the device (4a) is adapted to automatically transmit a reply containing the specific information.

31. The monitoring service server (90) as claimed in claim 30 wherein the monitoring service application is adapted to automatically establish a communication link with a call center (12).

## Patentansprüche

1. Verfahren, um eine drahtlose Vorrichtung (4a) dazu zu veranlassen, automatisch eine Nachricht (5) zu erzeugen, um sie an einen vorherbestimmten Empfänger (10) zu senden, um Informationen über die Umgebung bereitzustellen, in der sich die drahtlose Vorrichtung (4a) befindet, wobei das Verfahren folgende Schritte umfasst:
Erfassen von Informationen (52) über die Umgebung, in der sich die Vorrichtung (4a) befindet;
automatisches Einfügen (54) der erfassten Informationen in die Nachricht (5);
automatisches Senden (58, 62) der Nachricht (5) an den vorherbestimmten Empfänger (10), der das Identifizieren der ankommenden Nachricht (5) als Zwangsnachricht ermöglicht;
Empfangen (78) einer Abfrage, die eine Anfrage nach weiteren Informationen an die drahtlose Vorrichtung (4a) enthält;
automatisches Erhalten (80) der weiteren Informationen, um auf die Abfrage zu antworten; und
automatisches Senden (82) einer Antwort, die die weiteren Informationen enthält, an den vorherbestimmten Empfänger (10).

2. Verfahren nach Anspruch 1, wobei der Schritt des Erfassens (52) der Informationen folgende Schritte umfasst:
Erhalten von Daten des Globalen Positionierungssystems (GPS-Daten) unter Verwendung einer GPS-Vorrichtung (40); und
Einfügen der GPS-Daten in die Nachricht (5), um sie an den vorherbestimmten Empfänger (10) zu senden.

3. Verfahren nach Anspruch 1 oder Anspruch 2, wobei der Schritt des Erfassens (52) der Informationen folgende Schritte umfasst:
heimliches und/oder automatisches Aufnehmen einer digitalen Fotografie unter Verwendung einer digitalen Kamera (42), die in der Vorrichtung (4a) integriert ist; und
Einfügen der digitalen Fotografie in die Nachricht (5), um sie an den vorherbestimmten Empfänger (10) zu senden.

4. Verfahren nach Anspruch 3, wobei der Schritt des heimlichen Aufnehmens einer digitalen Fotografie folgende Schritte umfasst:
Deaktivieren eines Kamerablitzlichtes in der digitalen Kamera (42);
Deaktivieren sämtlicher visuellen Anzeigen in der Vorrichtung (4a), die anzeigen, dass eine digitale Fotografie aufgenommen wird; und
Einstellen der digitalen Kamera (42) auf eine niedrige Auflösung, um die Datenübertragung zu erleichtern.

5. Verfahren nach Anspruch 3 oder Anspruch 4, das des Weiteren einen Schritt des Anwendens eines Datenkompressionsalgorithmus auf die digitale Fotografie umfasst, um eine kleinere digitale Bilddatei zu erzeugen, um die Datenübertragung zu erleichtern.

6. Verfahren nach einem der vorangehenden Ansprüche, wobei der Schritt des Erfassens (52) der Informationen folgende Schritte umfasst:
heimliches und/oder automatisches Aufzeichnen eines digitalen Audioclips unter Verwendung eines Mikrofons (44), das in der Vorrichtung (4a) integriert ist; und
Einfügen des digitalen Audioclips in die Nachricht (5) zum Senden an den vorherbestimmten Empfänger (10).

7. Verfahren nach einem der vorangehenden Ansprüche, wobei die Nachricht (5) zu einem Überwachungsdienst (10) gesendet wird, um dem Überwachungsdienst (10) aktualisierte Informationen über die Umgebung bereitzustellen, in der sich die Vorrichtung (4a) befindet.

8. Verfahren nach einem der Ansprüche 1 bis 6, wobei der Schritt des automatischen Sendens (58) der Nachricht (5) an den vorherbestimmten Empfänger (10) einen Schritt des Sendens einer Zwangs-E-Mail-Nachricht (5) über ein Datenpaketnetz (8) umfasst.

9. Verfahren nach Anspruch 8, das des Weiteren einen Schritt des Sendens (62) der Nachricht (5) unter Verwendung eines alternativen Kommunikationsmodus umfasst, wenn sich die Vorrichtung (4a) außerhalb eines Sendebereichs des Datenpaketnetzes (8) befindet.

10. Verfahren nach Anspruch 9, wobei der alternative Kommunikationsmodus entweder Kurzmitteilungsdienst "SMS" oder Multimedia-Mitteilungsdienst "(MMS)" umfasst.

11. Verfahren nach Anspruch 9 oder Anspruch 10, das des Weiteren folgende Schritte umfasst:
lokales Speichern (64) der Nachricht (5), wenn sämtliche Kommunikationsmodi für die Vorrichtung (4a) unverfügbar sind; und
Senden (58) der Nachricht (5) sobald ein erster Kommunikationsmodus wieder verfügbar wird.

12. Verfahren nach Anspruch 11, das des Weiteren einen Schritt der Verschlüsselung (64) der Nachricht zur sicheren vorübergehenden Speicherung (64) in einem nichtflüchtigen Speicher (30) der Vorrichtung (4a) umfasst.

13. Verfahren nach Anspruch 11 oder Anspruch 12, das des Weiteren den Schritt des vorübergehenden Deaktivierens sämtlicher Funktionen der Vorrichtung (4a) umfasst, die dem Benutzer sonst ermöglichen würden, einen beliebigen Teil des Speichers (30) der drahtlosen Vorrichtung (4a) zu löschen oder neu zu formatieren, bis die Nachricht (5) gesendet (58, 62) wurde.

14. System zum Überwachen der von drahtlosen Vorrichtungen (4a) stammenden Kommunikation, um Benutzern der drahtlosen Vorrichtungen (4a) Dienste bereitzustellen, wobei das System Folgendes umfasst:
eine drahtlose Vorrichtung (4a), die Folgendes aufweist:
eine Eingabevorrichtung, um dem Benutzer zu ermöglichen, automatisch eine Nachricht (5) zu erzeugen, um sie zu einem vorherbestimmten Empfänger (10) zu senden, um Informationen über die Umgebung bereitzustellen, in der sich die Vorrichtung (4a) befindet;
einen Prozessor (20), um die Vorrichtung (4a) anzuweisen, Informationen über die Umgebung zu erfassen, in der sich die Vorrichtung (4a) befindet, und um eine E-Mail-Anwendung (22), die auf der Vorrichtung (4a) ausgeführt wird, anzuweisen, die erfassten Informationen automatisch in die Nachricht (5) einzufügen und die Nachricht (5) automatisch an den vorherbestimmten Empfänger (10) zu senden; und
einen Überwachungsdienst (10), der auf einem Server gehosted ist, um die von der drahtlosen Vorrichtung (4a) stammende Kommunikation zu überwachen, und dafür konfiguriert ist, eine ankommende Nachricht (5), die automatisch von der drahtlosen Vorrichtung (4a) erzeugt und gesendet worden ist, als Zwangsnachricht zu identifizieren, wobei der Überwachungsdienst (10) dafür ausgelegt ist, eine Abfrage zu senden, die eine Anfrage nach weiteren Informationen an die drahtlose Vorrichtung (4a) enthält, die dafür ausgelegt ist, automatisch eine Antwort zu senden, die die weiteren Informationen enthält.

15. System nach Anspruch 14, wobei der Überwachungsdienst (10) dafür ausgelegt ist, bei Empfang der automatisch erzeugten Nachricht mit einem Call-Center (12) zu kommunizieren.

16. System nach Anspruch 14 oder Anspruch 15 bis 17, wobei die drahtlose Vorrichtung (4a) eine digitale Kamera (42) umfasst, um heimlich und/oder automatisch ein digitales Bild aufzunehmen, das die Vorrichtung (4a) automatisch an den Überwachungsdienst (10) senden kann.

17. System nach einem der Ansprüche 14 bis 16, wobei die drahtlose Vorrichtung (4a) einen GPS-Chip (40) umfasst, um Positionsdaten für die Vorrichtung (4a) zu erfassen, um sie an den Überwachungsdienst (10) zu senden.

18. System nach einem der Ansprüche 14 bis 17, wobei die drahtlose Vorrichtung (4a) ein Modul (24) für Kurzmitteilungsdient "SMS" oder ein Modul (26) für Multimedia-Mitteilungsdienst "MMS" als alternativen Sendemodus der Nachricht umfasst.

19. System nach einem der Ansprüche 14 bis 18, wobei der Prozessor (20) dafür konfiguriert ist, die E-Mail-Anwendung (22) anzuweisen, die Nachricht (5) durch vorübergehendes Speichern der Nachricht in einem Speicher (30) der drahtlosen Vorrichtung (4a) zu speichern, während die drahtlose Vorrichtung (4a) nicht in der Lage ist, mit dem Überwachungsdienst (10) zu kommunizieren.

20. Drahtlose Kommunikationsvorrichtung (4a) zum Übertragen von Informationen über eine Umgebung, in der sich die Vorrichtung (4a) befindet, wobei die drahtlose Vorrichtung (4a) Folgendes umfasst:
eine Eingabevorrichtung, um dem Benutzer zu ermöglichen, die drahtlose Vorrichtung (4a) zu veranlassen, automatisch eine Nachricht (5) zu erzeugen, um sie zu einem vorherbestimmten Empfänger (10) zu senden, um Informationen über die Umgebung bereitzustellen, in der sich die Vorrichtung (4a) befindet; und
einen Prozessor (20) zum Anweisen der Vorrichtung (4a), Informationen über die Umgebung zu erfassen, in der sich die Vorrichtung (4a) befindet, und zum Anweisen einer E-Mail-Anwendung (22), die Informationen automatisch in die Nachricht (5) einzufügen und die Nachricht automatisch an den vorherbestimmten Empfänger (10) zu senden, wobei der Prozessor (20) dafür ausgelegt ist, eine ankommende Nachricht von dem vorherbestimmten Empfänger (10) zu empfangen, die weitere Informationen anfordert, und die weiteren Informationen, die von der drahtlosen Vorrichtung (4a) erhalten werden, automatisch an den vorherbestimmten Empfänger (10) zu senden.

21. Drahtlose Kommunikationsvorrichtung (4a) nach Anspruch 20, die des Weiteren eine digitale Kamera (42) umfasst, um heimlich und/oder automatisch ein digitales Bild aufzunehmen, das die Vorrichtung (4a) automatisch zu dem vorherbestimmten Empfänger (10) senden kann.

22. Drahtlose Kommunikationsvorrichtung (4a) nach Anspruch 20 oder Anspruch 21, die des Weiteren einen GPS-Chip (40) umfasst, um Positionsdaten für die Vorrichtung (4a) zu erfassen, um sie an den vorherbestimmten Empfänger (10) zu senden.

23. Drahtlose Kommunikationsvorrichtung (4a) nach einem der Ansprüche 20 bis 22, die des Weiteren ein Modul (24) für Kurzmitteilungsdient "SMS" oder ein Modul (26) für Multimedia-Mitteilungsdienst "MMS" als alternativen Sendemodus der Zwangsnachricht (5) umfasst.

24. Drahtlose Kommunikationsvorrichtung (4a) nach einem der Ansprüche 20 bis 23, wobei der Prozessor (20) dafür konfiguriert ist, die E-Mail-Anwendung (22) anzuweisen, die Nachricht (5) durch vorübergehendes Speichern der Nachricht (5) in einem Speicher (30) der drahtlosen Vorrichtung (4a) zu speichern, während die drahtlose Vorrichtung (4a) nicht in der Lage ist, zu kommunizieren.

25. Drahtlose Kommunikationsvorrichtung (4a) nach einem der Ansprüche 20 bis 24, die des Weiteren ein Mikrofon (44) umfasst, um heimlich und/oder automatisch einen digitalen Audioclip aufzuzeichnen, um ihn an den vorherbestimmten Empfänger (10) zu senden.

26. Drahtlose Kommunikationsvorrichtung (4a) nach Anspruch 21 oder einem der Ansprüche 22 bis 25, wenn sie von Anspruch 21 abhängig sind, wobei der Prozessor (20) dafür konfiguriert ist, die digitale Kamera (42) anzuweisen, ein Kamerablitzlicht und sämtliche visuellen Anzeigen, die anzeigen würden, dass eine digitale Fotografie aufgenommen wird, zu deaktivieren.

27. Drahtlose Kommunikationsvorrichtung (4a) nach Anspruch 26, wobei der Prozessor (20) dafür konfiguriert ist, die digitale Kamera (42) anzuweisen, mit niedriger Auflösung zu fotografieren.

28. Drahtlose Kommunikationsvorrichtung (4a) nach Anspruch 26 oder Anspruch 27, wobei der Prozessor (20) dafür konfiguriert ist, einen Datenkompressionsalgorithmus auzuführen, um die digitale Fotografie vor dem Senden zu komprimieren.

29. Computerprogrammprodukt, das Code umfasst, der dafür ausgelegt ist, eine drahtlose Kommunikationsvorrichtung (4a) zu veranlassen, die Schritte des Verfahrens nach einem der Ansprüche 1 bis 13 auzuführen, wenn das Computerprogrammprodukt in den Speicher (30) geladen wird und in einem Prozessor (20) der drahtlosen Kommunikationsvorrichtung (4a) ausgeführt wird.

30. Überwachungsdienstserver (90) zum Hosten eines Überwachungsdienstes (10) zum Überwachen einer oder mehrerer Nachrichten (5), die automatisch von einer oder mehreren drahtlosen Kommunikationsvorrichtungen (4a) erzeugt und gesendet werden, wobei der Überwachungsdienstserver (90) Folgendes umfasst:
eine externe Datenverbindung (91) durch eine Firewall (92) zu einem externen Datennetz (8), mit dem ein oder mehrere drahtlose Netze (2), die die eine oder mehreren drahtlosen Kommunikationsvorrichtungen (4a) hosten, verbunden sind;
mindestens eine interne Datenverbindung (93) mit einem oder mehreren entsprechenden Anwendungsservern (94, 96, 98), die hinter der Firewall (92) angeordnet sind, mit der die drahtlosen Kommunikationsvorrichtungen (4a) sichere Verbindungen durch die Firewall (92) und den Überwachungsdienstserver herstellen können; und
eine Überwachungsdienstanwendung, die auf dem Überwachungsdienstserver (90) ausgeführt wird, um Daten, die den Überwachungsdienstserver (90) durchlaufen, zu filtern, um eine Zwangsnachricht (5) zu erfassen, die von einer der Kommunikationsvorrichtungen (4a) automatisch erzeugt und gesendet wird und Informationen über die Umgebung enthält, in der sich die drahtlose Kommunikationsvorrichtung (4a), die die Nachricht sendet, befindet, wobei die Überwachungsdienstanwendung des Weiteren dafür ausgelegt ist, eine Abfrage an die drahtlose Kommunikationsvorrichtung (4a) zu senden, um anzufordern, dass die Vorrichtung (4a) heimlich spezifische Informationen empfängt und damit antwortet, wobei die Vorrichtung (4a) dafür ausgelegt ist, automatisch eine Antwort zu senden, die die spezifischen Informationen enthält.

31. Überwachungsdienstserver (90) nach Anspruch 30, wobei die Überwachungsdienstanwendung dafür ausgelegt ist, automatisch eine Kommunikationsverbindung mit einem Call-Center (12) herzustellen.

## Revendications

1. Un procédé pour amener un dispositif sans fil (4a) à générer automatiquement un message (5) à envoyer à un destinataire prédéterminé (10) pour fournir des informations sur l'environnement dans lequel le dispositif sans fil (4a) est situé, le procédé comportant les étapes visant à :
capturer des informations (52) sur l'environnement dans lequel le dispositif (4a) est situé ;
incorporer automatiquement (54) les informations capturées dans le message (5) ; transmettre automatiquement (58, 62) le message (5) au destinataire prédéterminé (10) qui permet d'identifier le message entrant (5) comme un message de contrainte ;
recevoir (78) une requête contenant une demande d'informations supplémentaires au dispositif sans fil (4a) ;
obtenir automatiquement (80) les informations supplémentaires pour répondre à la requête ; et
transmettre automatiquement (82) au destinataire prédéterminé (10) une réponse contenant les informations supplémentaires.

2. Le procédé tel que revendiqué dans la revendication 1 où l'étape visant à capturer (52) les informations comporte les étapes visant à :
obtenir des données de Système mondial de positionnement (« GPS ») en utilisant un dispositif GPS (40) ; et
incorporer les données GPS dans le message (5) à transmettre au destinataire prédéterminé (10).

3. Le procédé tel que revendiqué dans la revendication 1 ou la revendication 2 où l'étape visant à capturer (52) les informations comporte les étapes visant à :
prendre subrepticement et/ou automatiquement une photographie numérique en utilisant un appareil numérique (42) intégré au dispositif (4a) ; et
incorporer la photographie numérique dans le message (5) à transmettre au destinataire prédéterminé (10).

4. Le procédé tel que revendiqué dans la revendication 3 où l'étape visant à prendre subrepticement une photographie numérique comporte les étapes visant à :
désactiver un flash d'appareil sur l'appareil numérique (42) ;
désactiver tous les indicateurs visuels sur le dispositif (4a) qui indiquent qu'une photographie numérique est en train d'être prise ; et
régler l'appareil numérique (42) à une faible résolution pour faciliter la transmission de données.

5. Le procédé tel que revendiqué dans la revendication 3 ou la revendication 4 comporte de plus une étape visant à appliquer un algorithme de compression de données à la photographie numérique pour créer un fichier d'image numérique plus petit afin de faciliter la transmission de données.

6. Le procédé tel que revendiqué dans n'importe laquelle des revendications précédentes où l'étape visant à capturer (52) les informations comporte les étapes visant à :
prendre subrepticement et/ou automatiquement un clip audio numérique en utilisant un microphone (44) intégré au dispositif (4a) ; et
incorporer le clip audio numérique dans le message (5) à transmettre au destinataire prédéterminé (10).

7. Le procédé tel que revendiqué dans n'importe laquelle des revendications précédentes où le message (5) est transmis à un service de surveillance (10) pour fournir des informations mises à jour sur l'environnement dans lequel le dispositif (4a) est situé au service de surveillance (10).

8. Le procédé tel que revendiqué dans n'importe laquelle des revendications 1 à 6 où l'étape visant à transmettre automatiquement (58) le message (5) au destinataire prédéterminé (10) comporte une étape visant à transmettre un message de contrainte par courrier électronique (5) sur un réseau de paquets de données (8).

9. Le procédé tel que revendiqué dans la revendication 8 comportant de plus une étape visant à transmettre (62) le message (5) en utilisant un mode alternatif de communication quand le dispositif (4a) est en dehors d'une zone de couverture du réseau de paquets de données (8).

10. Le procédé tel que revendiqué dans la revendication 9 où le mode alternatif de communication comporte n'importe quel mode parmi un service de messages courts (« SMS ») ou un service de messages multimédias (« MMS »).

11. Le procédé tel que revendiqué dans la revendication 9 ou la revendication 10 comportant de plus les étapes visant à :
stocker localement (64) le message (5) quand tous les modes de communication pour le dispositif (4a) sont indisponibles ; et
transmettre (58) le message (5) aussitôt qu'un premier mode de communication redevient disponible.

12. Le procédé tel que revendiqué dans la revendication 11 comportant de plus une étape visant à chiffrer (64) le message en vue d'un stockage temporaire sécurisé (64) dans une mémoire non volatile (30) du dispositif (4a).

13. Le procédé tel que revendiqué dans la revendication 11 ou la revendication 12 comportant de plus l'étape visant à désactiver temporairement toute fonctionnalité de dispositif (4a) qui sinon permettrait à l'utilisateur d'effacer ou de reformater n'importe quelle portion de la mémoire (30) du dispositif sans fil (4a) jusqu'à ce que le message (5) ait été transmis (58, 62).

14. Un système pour surveiller des communications de dispositifs sans fil (4a) pour fournir des services à des utilisateurs des dispositifs sans fil (4a), le système comportant :
un dispositif sans fil (4a) ayant :
un dispositif d'entrée pour permettre à l'utilisateur de générer automatiquement un message (5) à envoyer à un destinataire prédéterminé (10) pour fournir des informations sur l'environnement dans lequel le dispositif (4a) est situé ;
un processeur (20) pour conduire le dispositif (4a) à capturer des informations sur l'environnement dans lequel le dispositif (4a) est situé et pour donner instruction à une application de courrier électronique (22) en exécution sur le dispositif (4a) d'incorporer automatiquement les informations capturées dans le message (5) et de transmettre automatiquement le message (5) au destinataire prédéterminé (10) ; et
un service de surveillance (10) hébergé sur un serveur pour surveiller des communications du dispositif sans fil (4a) et configuré pour identifier un message entrant (5), qui a été généré et transmis automatiquement par le dispositif sans fil (4a), comme un message de contrainte, où le service de surveillance (10) est agencé pour envoyer une requête contenant une demande d'informations supplémentaires au dispositif sans fil (4a) qui est adapté pour transmettre automatiquement une réponse contenant les informations supplémentaires.

15. Le système tel que revendiqué dans la revendication 14 où le service de surveillance (10) est agencé pour communiquer avec un centre d'appels (12) à la réception du message généré automatiquement.

16. Le système tel que revendiqué dans la revendication 14 ou les revendications 15 à 17 où le dispositif sans fil (4a) comporte un appareil numérique (42) pour capturer subrepticement et/ou automatiquement une image numérique que le dispositif (4a) peut transmettre automatiquement au service de surveillance (10).

17. Le système tel que revendiqué dans n'importe laquelle des revendications 14 à 16 où le dispositif sans fil (4a) comporte une puce GPS (40) pour capturer des données de position pour le dispositif (4a) à transmettre au service de surveillance (10).

18. Le système tel que revendiqué d'un importe laquelle des revendications 14 à 17 où le dispositif sans fil (4a) comporte un module de service de messages courts (« SMS ») (24) ou un module de service de messages multimédias (« MMS ») (26) comme mode alternatif de transmission du message.

19. Le système tel que revendiqué dans n'importe laquelle des revendications 14 à 18 où le processeur (20) est configuré pour conduire l'application de courrier électronique (22) à stocker le message (5) en stockant temporairement le message dans une mémoire (30) du dispositif sans fil (4a) tandis que le dispositif sans fil (4a) est incapable de communiquer avec le service de surveillance (10).

20. Un dispositif de communication sans fil (4a) pour communiquer des informations sur un environnement dans lequel le dispositif (4a) est situé, le dispositif sans fil (4a) comportant :
un dispositif d'entrée pour permettre à un utilisateur d'amener le dispositif sans fil (4a) à générer automatiquement un message (5) à envoyer à un destinataire prédéterminé (10) pour fournir des informations sur l'environnement dans lequel le dispositif (4a) est situé ; et
un processeur (20) pour conduire le dispositif (4a) à capturer des informations sur l'environnement dans lequel le dispositif (4a) est situé et pour donner instruction à une application de courrier électronique (22) d'incorporer automatiquement les informations dans le message (5) et de transmettre automatiquement le message au destinataire prédéterminé (10) où le processeur (20) est adapté pour recevoir un message entrant du destinataire prédéterminé (10) demandant des informations supplémentaires et pour transmettre automatiquement au destinataire prédéterminé (10) les informations supplémentaires obtenues du dispositif sans fil (4a).

21. Le dispositif de communication sans fil (4a) tel que revendiqué dans la revendication 20 comportant de plus un appareil numérique (42) pour capturer subrepticement et/ou automatiquement une image numérique que le dispositif (4a) peut transmettre automatiquement au destinataire prédéterminé (10).

22. Le dispositif de communication sans fil (4a) tel que revendiqué dans la revendication 20 ou la revendication 21 comportant de plus une puce GPS (40) pour capturer des données de position pour le dispositif (4a) à transmettre au destinataire prédéterminé (10).

23. Le dispositif de communication sans fil (4a) tel que revendiqué dans n'importe laquelle des revendications 20 à 22 comportant de plus un module de service de messages courts (« SMS ») (24) ou un module de service de messages multimédias (« MMS ») (26) comme mode alternatif de transmission du message de contrainte (5).

24. Le dispositif de communication sans fil (4a) tel que revendiqué dans n'importe laquelle des revendications 20 à 23 où le processeur (20) est configuré pour conduire l'application de courrier électronique (22) à stocker le message (5) en stockant temporairement le message (5) dans une mémoire (30) du dispositif sans fil (4a) tandis que le dispositif sans fil (4a) est incapable de communiquer.

25. Le dispositif de communication sans fil (4a) tel que revendiqué dans n'importe laquelle des revendications 20 à 24 comportant de plus un microphone (44) pour enregistrer subrepticement et/ou automatiquement un clip audio numérique à transmettre au destinataire prédéterminé (10).

26. Le dispositif de communication sans fil (4a) tel que revendiqué dans la revendication 21 ou n'importe laquelle des revendications 22 à 25 lorsque dépendantes de la revendication 21 où le processeur (20) est configuré pour donner instruction à l'appareil numérique (42) de désactiver un flash d'appareil et tous les indicateurs visuels qui indiqueraient qu'une photo numérique est en train d'être prise.

27. Le dispositif de communication sans fil (4a) tel que revendiqué dans la revendication 26 où le processeur (20) est configuré pour donner instruction à l'appareil numérique (42) de photographier à faible résolution.

28. Le dispositif de communication sans fil (4a) tel que revendiqué dans la revendication 26 ou la revendication 27 où le processeur (20) est configuré pour exécuter un algorithme de compression de données pour compresser la photographie numérique avant transmission.

29. Un produit de programme informatique comportant un code adapté pour entraîner un dispositif de communication sans fil (4a) à réaliser les étapes du procédé de n'importe laquelle des revendications 1 à 13 quand le produit de programme informatique est chargé dans la mémoire (30) et exécuté sur un processeur (20) du dispositif de communication sans fil (4a).

30. Un serveur de service de surveillance (90) pour héberger un service de surveillance (10) afin de surveiller un ou plusieurs message(s) (5) généré(s) et transmis automatiquement par un ou plusieurs dispositif(s) de communication sans fil (4a), le serveur de service de surveillance (90) comportant :
une connexion de données externe (91) par le biais d'un pare-feu (92) à un réseau de données externe (8) auquel un ou plusieurs réseau(x) sans fil (2) hébergeant le ou les dispositif(s) de communication sans fil (4a) est/sont connecté(s) ;
au moins une connexion de données interne (93) à un ou plusieurs serveur(s) d'applications respectif(s) (94, 96, 98) disposé(s) derrière le pare-feu (92) avec le(s)quel(s) les dispositifs de communication sans fil (4a) peuvent établir des connexions sécurisées par le biais du pare-feu (92) et du serveur de service de surveillance ; et
une application de service de surveillance en exécution sur le serveur de service de surveillance (90) pour filtrer des données transitant par le serveur de service de surveillance (90) afin de détecter un message de contrainte (5) généré et transmis automatiquement par l'un des dispositifs de communication (4a) et contenant des informations sur l'environnement dans lequel le dispositif de communication sans fil (4a) transmettant le message est situé où l'application de service de surveillance est de plus adaptée pour transmettre une requête au dispositif de communication sans fil (4a) pour demander que le dispositif (4a) obtienne subrepticement et réponde avec des informations spécifiques, où le dispositif (4a) est adapté pour transmettre automatiquement une réponse contenant les informations spécifiques.

31. Le serveur de service de surveillance (90) tel que revendiqué dans la revendication 30 où l'application de service de surveillance est adaptée pour établir automatiquement une liaison de communication avec un centre d'appels (12).
